# EUROPEAN PATENT APPLICATION

(11) **EP 1 953 522 A2**
(43) Date of publication of application: **06.08.2008**
(21) Application number: 08001938.3
(22) Date of filing: 01.02.2008
(51) Int. Cl.: G01N 3/08

(54) **Compression test apparatus**

(30) Priority: 02.02.2007 JP 2007024275
(71) Applicant: NITTO DENKO CORPORATION, Osaka (JP)
(72) Inventor: Nakano, Shinya, Ibaraki-shi Osaka (JP)
(74) Representative: Grünecker, Kinkeldey, Stockmair & Schwanhäusser Anwaltssozietät

(57) **Abstract**

A stage is adapted to support the test piece. A loading section is operable to apply the compression force to the test piece supported on the stage. A detecting section is operable to detect the compression force applied to the test piece. An elastic member elastically supports the stage so that the stage is movable in an action direction of the compression force.

## Description

The disclosure of Japanese Patent Application No. 2007-024275 filed February 2, 2007 including specification, drawings and claims is incorporated herein by reference in its entirety.

### BACKGROUND

This invention relates to a compression test apparatus capable of preventing breakage of a load detection unit caused by an excessive load, the load detection unit that detects a compression load acting on a test piece placed on a stage.

For a compression test apparatus for detecting a compression load acting on a test piece placed on a stage by a load detection unit such as a load cell, it is necessary to take a measure for protecting the load detection unit from breakage caused by an excessive load. And there has been proposed an excessive load prevention device provided with an elastic member disposed between a pressure member for pressurizing on a load cell and the load cell, and with a stopper for restricting a movement amount of the pressure member (see Patent Publication 1, for example). More specifically, a case housing the elastic member is provided upright on a guide plate supported so as to be movable by a predetermined amount in an action direction of the load with respect to the stopper, and a pressurizing force is caused to act on the case by a torque arm.

With the use of the apparatus, the size of the pressurizing force by the torque arm is transmitted to the load cell as it is without being varied even when the elastic member is deformed, and the pressurizing force acting on the load cell reaches to the maximum when lowering of the case is stopped by the stopper. After that, when a larger pressurizing force is caused, the pressurizing force is directly transmitted to the stopper, and the maximum pressurizing force caused when the lowering of the case is stopped is continuously exerted on the load cell, thereby preventing breakage caused by an excessive load on the load cell.

In another example, there has been proposed a material tester having a loading unit for applying a load to a test piece by moving in a direction of the load applied to the test piece and testing a mechanical property by applying the load to the test piece by the loading unit. The material tester comprises an elastic deformation unit disposed between the test piece and the loading unit and capable of elastic deformation in a load axial direction of the test piece when a load larger than a predetermined value is applied to the test piece (see Patent Publication 2, for example).

In the material tester, an excessive load prevention device (protector) provided with the elastic deformation unit is interposed between a load cell attached to a crosshead serving as the loading unit and an upper pressurizing plate, and the test piece is disposed between the upper pressurizing plate and a lower pressurizing plate. The excessive load prevention device has a compression coil spring serving as the elastic deformation unit and mounted between a protector frame and a pressure resistant flange, and the protector frame is suspended from the crosshead via another compression coil spring. An elastic repulsion force of the compression coil spring serving as the elastic deformation unit is adjusted by an adjustment nut, and an elastic repulsion force of the compression coil spring for suspending the protector frame is adjusted by a bolt penetrating through the compression coil spring and screwed on the crosshead.

With such constitution, when a load is started to be applied to the test piece along with a lowering of the crosshead, the protector exists between the load cell and the upper pressurizing plate as a rigid body during a period in which the load acting on the test piece is less than the elastic repulsion force (set load) of the compression coil spring. When the load acting on the test piece exceeds the set load of the compression coil spring due to further lowering of the crosshead, the compression coil spring starts to deform. Due to the deformation, it is possible to prevent a sharp increase in load caused on the test piece and the load cell and to prevent the load cell and the test piece from breakage by stopping the lowering of the crosshead by way of a limit switch operated by retraction of the pressure resistant flange before reaching to the load cell limit load.

When a load is caused to act on the test piece, a weight of the upper pressurizing plate, the protector frame, the pressure resistant flange, and the elastic deformation unit mounted between the protector frame and the pressure resistant flange, which are mounted between the load cell and the test piece, is balanced out by the elastic repulsion force of the compression coil spring. The elastic repulsive force is adjusted by an amount of fastening of the bolt as mentioned above.
Patent Publication 1: JP-UM-A-58-119739
Patent Publication 2: JP-A-11-23434

However, in the former related-art (Patent Publication 1), since the excessive load prevention device provided between the pressurizing member and the load cell has the case that is provided upright on the guide plate for housing the elastic member, the excessive load prevention device as a whole has a considerable weight. Also, due to the elastic member, there is a tendency that a large inertial force is caused to act at the moment of start of driving in a high speed compression test, and an excessive load tends to be exerted on the load cell, thereby making it difficult to perform highly accurate speed control.

Also, in the latter related-art (Patent Publication 2), though it is described that it is possible to balance out the weight of the excessive load prevention device and the like that exist between the load cell and the test piece, which is imparted to the load cell, by the elastic repulsion force of the compression coil spring, there is the problem of the excessive load caused to act on the load cell due to the large inertial force acting at the moment of the start of driving and the difficulty in accurate speed control because of the spring mechanism as well as the former related-art. Also, it is necessary to delicately adjust the amount of fastening of the bolt in order to appropriately set the elastic repulsion force of the compression coil spring, and there is a fear for generation of a load in a direction of fastening to be applied to the load cell depending on the adjustment. Also, there has been a drawback of an increase in number of components and an increase in cost.

### SUMMARY

It is therefore an object of the invention to provide a compression test apparatus capable of highly accurate speed control in a high speed compression test and has a simple constitution enabling prevention of breakage of a load detection unit due to an excessive load.

In order to achieve the above described object, according to an aspect of the invention, there is provided a compression test apparatus for detecting a compression force applied to a test piece, comprising: a stage, adapted to support the test piece; a loading section, operable to apply the compression force to the test piece supported on the stage; a detecting section, operable to detect the compression force applied to the test piece; and an elastic member, elastically supporting the stage so that the stage is movable in an action direction of the compression force.

With such constitution, since the stage on which the test piece is placed is elastically and repulsively supported by the elastic member in such a fashion that the stage is movable in the action direction of the compression force, the stage acts as a rigid body until the compression load acting on the test piece reaches to a set load (maintained to immobilized state) when the elastic repulsion member is maintained to a predetermined elastic repulsion force (set load). Therefore, it is possible to compress the test piece at a constant speed. More specifically, since the compression load is directly applied to the test piece on the stage, it is possible to achieve good speed responsiveness in a high speed compression test as being hardly or never influenced by an inertial force, thereby enabling highly accurate speed control. When the compression load acting on the test piece exceeds the set load, the stage is depressed due to a shrinkage allowance of the elastic repulsion member, so that the load applied to the load detection unit is reduced, thereby preventing breakage from being caused by an excessive load. Also, since the constitution is simple, the apparatus is reduced in trouble-making factor and provided at an inexpensive price.

An elastic force of the elastic member with respect to the stage may be variably adjustable. With such constitution, it is possible to easily perform setting change of test conditions by varying the elastic force (set load) of the elastic member. Also, by setting the set load to a value that is satisfactorily safe or the like, it is possible to more reliably prevent breakage of the load detection unit due to excessive load.

The compression test apparatus may further comprise a casing, supporting the stage so that the stage is movable in the action direction of the compression force, wherein the casing has a first screw portion and the stage has a second screw portion engaged with the first screw portion; and wherein the elastic force of the elastic member is variably adjusted by a relative displacement of the first and second screw portions. With such constitution, it is possible to variably adjust the elastic force of the elastic member with the easy constitution and by operating the screw members.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a sectional view showing a support structure of a stage of a compression test apparatus according to an embodiment of the present invention;
Fig. 2 is a block diagram showing a constitution of the compression test apparatus according to the embodiment;
Fig. 3(a) is a diagram showing an ideal compression behavior of a typical compression test apparatus (displacement-time diagram);
Fig. 3(b) is a diagram showing actual measurement data of a high speed compression test in the compression test apparatus according to the embodiment(displacement-time diagram);
Fig. 3(c) is a diagram showing the actual measurement data of the high speed compression test in the compression test apparatus according to the embodiment (stress-distortion diagram);
Fig. 4(a) is a diagram showing a theoretical compression behavior of the compression test apparatus according to the embodiment (load-displacement diagram); and
Fig. 4(b) is a diagram showing actual measurement data of the high speed compression test in the compression test apparatus according to the embodiment (load-displacement diagram).

### DETAILED DESCRIPTION OF THE EMBODIMENTS

Hereinafter, a compression test apparatus according to one embodiment of the present invention will be described in detail with reference to the drawings.

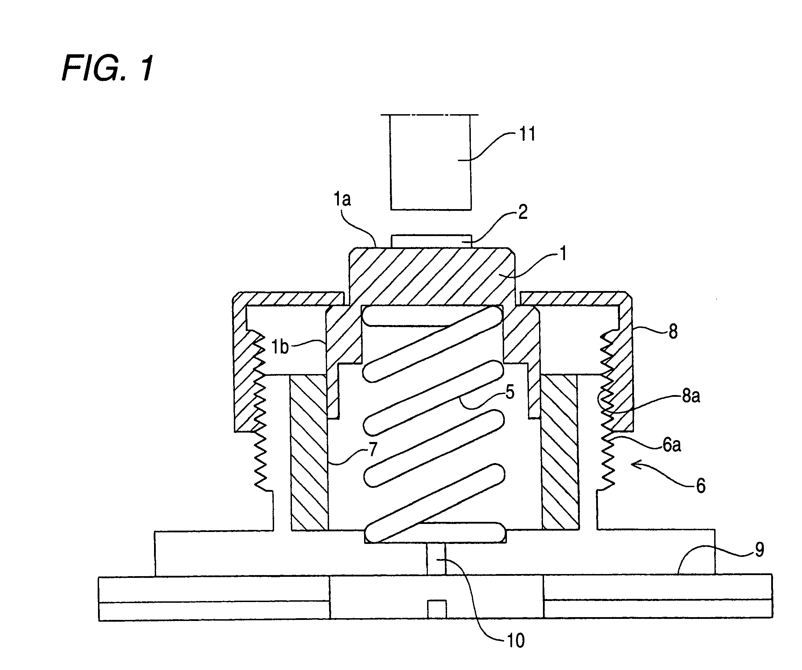

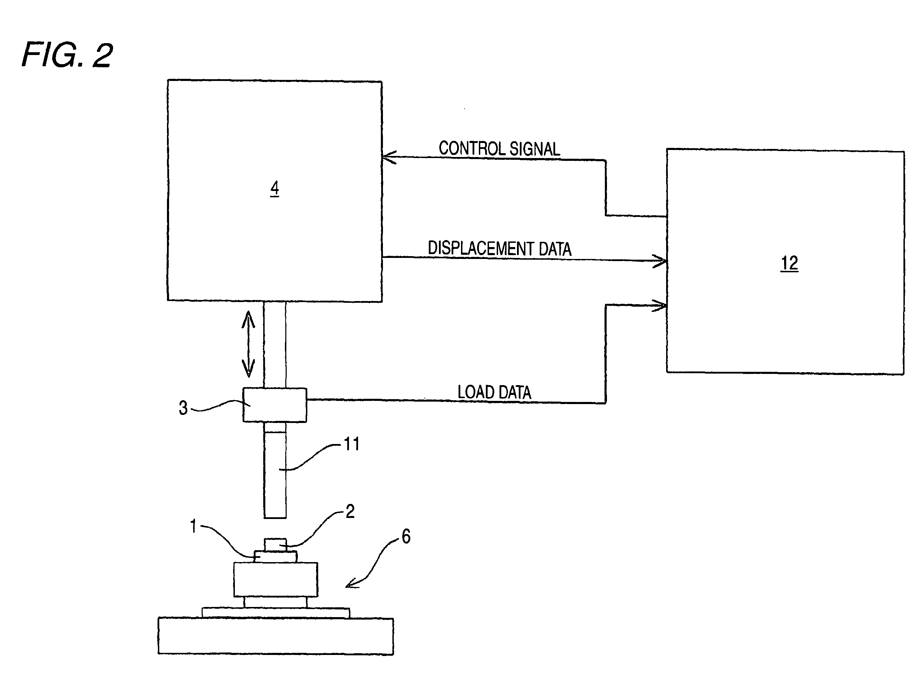

As shown in Figs. 1 and 2, the compression test apparatus causes a compression force to act on a test piece 2 made from a foamed material and the like and placed on a stage 1 at a high speed by a loading unit 4 via a load detection unit 3 to detect a repulsive load by the load detection unit 3 and provided with an elastic repulsion member 5 elastically and repulsively supporting the stage 1 in such a fashion that the stage is displaceable in an action direction of the compression force in order to prevent breakage of the load detection unit 3 due to an excessive load.

The stage (also referred to as press button) 1 has a cylindrical sliding member 1b provided at a lower rim of a circular platform 1a on which the test piece 2 is placed, and the sliding member 1b is inserted as being vertically movable inside a dry bearing 7 fitted inside a main body casing 6. A coil spring serving as an elastic repulsion member 5 is mounted between an undersurface of the platform 1a and a bottom of the main body casing 6. A load adjustment ring (adjustment operation member) 8 for regulating an upward movement of the stage 1 caused by the elastic repulsion force of the elastic repulsion member 5 and for adjusting the elastic repulsion force (set load) of the elastic repulsion member 5 is fixed to an upper periphery of the sliding member 1b, and a female screw (screw member) 8a formed on an inner periphery of the load adjustment ring 8 is screwed to a male screw (screw member) 6a formed on an outer periphery of the main body casing 6. At a lower part of the main body casing 6, a base 9 is attached. An air vent 10 is provided at the bottom of the main body casing 6.

An overall constitution of the compression test apparatus is such that an upper part of a beam of a compression type load cell serving as the load detection unit 3 is connected to an output axis of an actuator (vibrator) serving as the loading unit 4, and that an indenter 11 in the form of a round bar connected to a lower part of the beam compresses the test piece 2 placed on the platform 1a of the stage 1 as shown in Fig. 2. A displacement control signal is outputted from a control PC 12 to the actuator 4, and displacement data from the actuator 4 and a load detection signal from the load cell 3 are inputted to the control PC 12.

With the compression test apparatus constituted as described above, since the stage 1 on which the test piece 2 is placed is elastically and repulsively supported by the coil spring 5 in such a fashion that the stage 1 is deformable in the action direction of the compression force, the stage 1 acts as a rigid body until the compression load acting on the test piece 2 reaches to the set load (maintained to immobilized state) when the coil spring 5 is maintained to a predetermined elastic repulsion force (set load), thereby making a moving speed of the indenter 11 approaching to the stage 1 constant. Therefore, it is possible to compress the test piece 2 at a constant speed. More specifically, since the compression load is directly applied to the test piece 2 on the stage 1 from the indenter 11 attached to the load cell 3, it is possible to obtain good speed responsiveness as being hardly or never influenced by an inertial force in a high speed compression test, thereby enabling highly accurate speed control. Since the stage 1 is depressed by a shrinkage allowance of the coil spring 5 when the compression load acting on the test piece 2 exceeds the set load, the load on the load cell 3 is reduced, and breakage due to an excessive load is prevented.

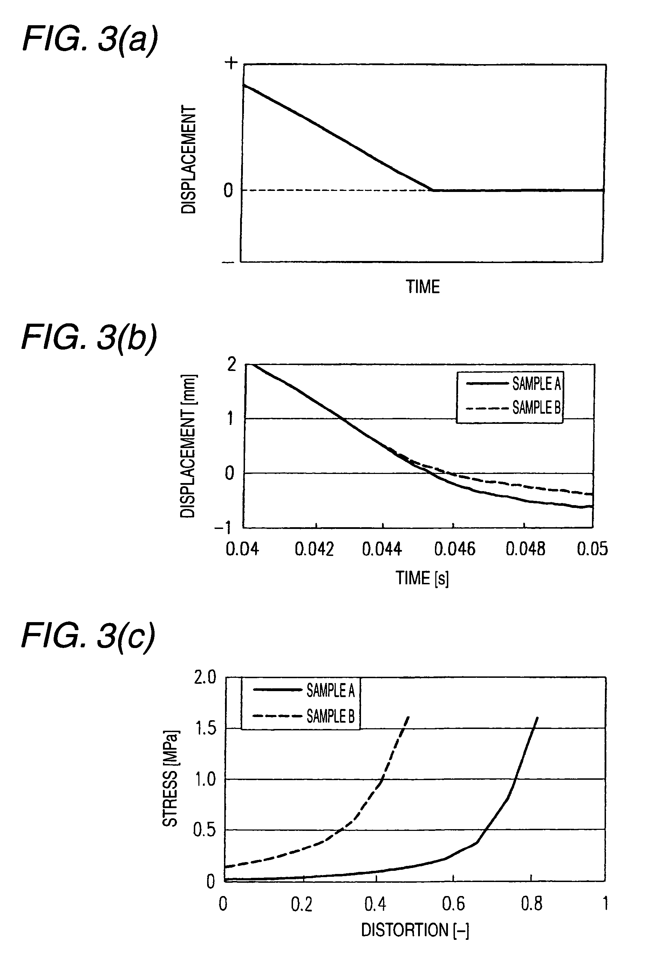

As shown in Fig. 3(a), in an ideal compression behavior of a typical compression test apparatus, the indenter 11 compresses the test piece 2 at a constant speed in a state where the test piece 2 is placed on the stage 1 acting as the rigid body as described above, and it is ideal to instantaneously stop the indenter 11 at a position immediately before breakage of the load cell 3 and at an acceleration speed of -∞. However, though the ideal compression behavior shown in Fig. 3(a) occurs when the compression speed is low, it is difficult, in the high speed compression test, to stop the indenter 11 with a set driving displacement (amount) due to the inertial force even when the displacement control signal to the actuator 4 is stopped at an appropriate timing. Therefore, the load cell may be broken due to a sharp increase in compression stress. In the case of stopping the indenter 11 with a desired driving displacement (amount) for reducing the load on the load cell 3, it is necessary to avoid influence of inertial force by setting a value of the driving displacement (amount) to a value lower than the desired value. However, by setting the lower value, the speed of the indenter 11 during compression of the test piece 2 is lowered to make it impossible to compress the test piece 2 at a constant speed.

In view of the above-described point, the present compression test apparatus is capable of compressing the test piece 2 at a constant speed until the set load is achieved by setting a driving displacement (amount) to -0.5 mm when a surface of the stage 1 is 0 mm of driving displacement (amount) (upward displacement is positive value, and downward displacement is negative value). Fig. 3(b) shows actual measurement data, i.e. a driving displacement (amount) curve, of a high speed compression test using the present compression test apparatus in the case where two types of foamed materials are used as the test pieces 2. It is indicated that, though the sample A is compressed at a constant speed until about a driving displacement (amount) of 0.2 mm, a slight reduction in speed occurs in the sample B from a driving displacement (amount) of about 0.4 mm. As is apparent from Fig. 3(c) showing a stress-distortion curve of the sample A and the sample B shown when subjected to a high speed compression at a constant speed, such reduction in speed is caused by a sharp increase in load in the sample B since elasticity of the sample B is larger than that of the sample A.

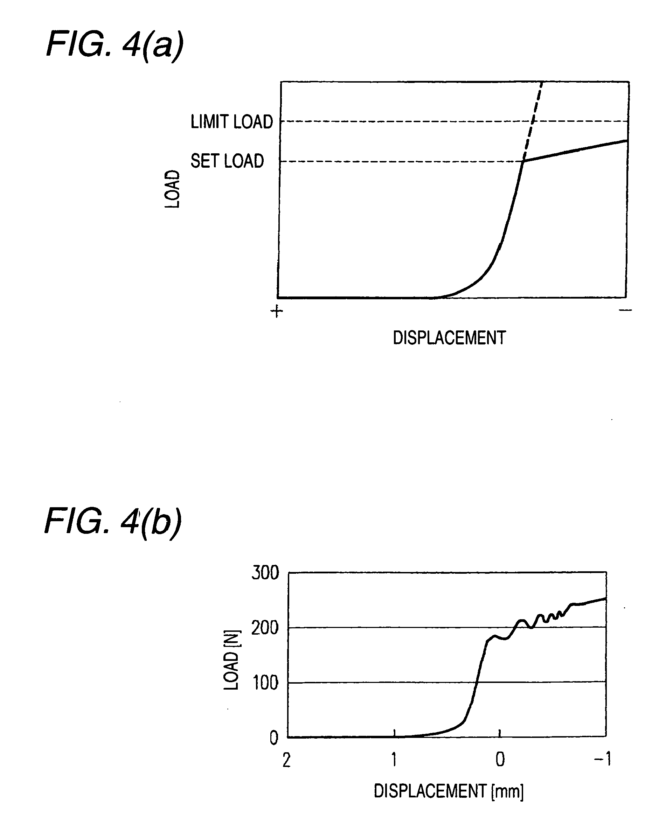

From an actually measured load-displacement profile shown in Fig. 4(b), it is apparent that the breakage due to the excessive load to the load cell 3 is prevented since the stage 1 is pressed to be moved downward from the time point at which the set load is achieved. Fig. 4(a) shows a logical compression behavior of the present compression test apparatus. With the present compression test apparatus, it is possible to stop the compression test apparatus with a load lower than the limit load since the increase in load is slowed down by the depression of the stage 1 starting from the time point at which the set load is achieved. It is easily understood from the comparison with Fig. 4(a) that the actual measurement data shown in Fig. 4(b) indicate such behavior. In Fig. 4(a), the broken line indicates a load-displacement profile after the achievement of set load in the case where the constitution of the present compression test apparatus is not utilized.

As described above, since the stage 1 on which the test piece 2 is placed is elastically and repulsively supported by the elastic repulsion member 5 (serving as excessive load prevention unit) in the compression test apparatus of this invention, influence of the inertial force is hardly or never exerted when the compression load is applied to the test piece 2 by the loading unit 4 via the load cell 3 owing to the elimination of necessity of mounting a heavy excessive load prevention device between the load cell 3 and the test piece, thereby enabling highly accurate speed control in the high speed compression test. Also, since the constitution is simple, the apparatus is reduced in trouble-making factor and provided at an inexpensive price.

This invention is not limited to the embodiment, and it is possible to conduct design alteration and modification as required insofar as the design alteration and modification do not deviate from the scope of this invention.

For example, in this embodiment, the load adjustment ring 8 is provided as the adjustment operation member for variably adjusting the elastic repulsion force of the elastic repulsion member 5, and the female screw (screw member) 8a formed on the inner periphery of the load adjustment ring 8 is screwed to the male screw (screw member) 6a formed on the outer periphery of the main body casing 6. However, such constitution is not limitative, and an adjustment screw capable of being screwed in a direction of raising the lower part of the elastic repulsion member 5 may be threadably mounted on the bottom of the main body casing 6 as the adjustment operation member.

Also, though the compression force is caused to act on the test piece 2 placed on the stage 1 via the load detection unit 3, i.e. the load detection unit 3 is disposed at the side of causing the compression force to act on the test piece 2, the load detection unit 3 may be disposed at the side of the stage across the test piece 2 or may be disposed at both of the sides.

Though the coil spring serves as the elastic repulsion member 5 in this embodiment, any other members having elasticity can also be used as the elastic repulsion member 5. Further, instead of the elastic repulsion member 5, a lifting mechanism capable of lifting the stage 1 can be applied in the compression test apparatus.

## Claims

1. A compression test apparatus for detecting a compression force applied to a test piece, comprising:
a stage, adapted to support the test piece;
a loading section, operable to apply the compression force to the test piece supported on the stage;
a detecting section, operable to detect the compression force applied to the test piece; and
an elastic member, elastically supporting the stage so that the stage is movable in an action direction of the compression force.

2. The compression test apparatus according to claim 1, wherein an elastic force of the elastic member with respect to the stage is variably adjustable.

3. The compression test apparatus according to claim 2, further comprising a casing, supporting the stage so that the stage is movable in the action direction of the compression force,
wherein the casing has a first screw portion and the stage has a second screw portion engaged with the first screw portion; and
wherein the elastic force of the elastic member is variably adjusted by a relative displacement of the first and second screw portions.

4. The compression test apparatus according to claim 1, wherein the loading section is provided with the detecting section.

5. The compression test apparatus according to claim 1, wherein the stage is provided with the detecting section.

6. A compression test method for detecting a compression force applied to a test piece, comprising:
providing the test piece on a stage;
applying the compression force to the test piece on the stage;
detect the compression force applied to the test piece,
wherein when the compression force is not more than a predetermined value, a position of the stage in an action direction of the compression force is fixed; and
wherein when the compression force is more than the predetermined value, the stage is moved in the action direction of the compression force.
